# EUROPEAN PATENT SPECIFICATION

(11) **EP 3 061 315 B1**
(45) Date of publication and mention of the grant of the patent: **19.02.2025**
(21) Application number: 14856386.9
(22) Date of filing: 23.09.2014
(51) Int. Cl.: H04W 4/02, H04L 65/1016, H04W 4/021, H04W 28/02, H04L 47/2466, H04L 47/2475, H04L 47/28, H04L 65/1104, H04W 76/50, H04W 4/90, H04L 1/1607

(54) **APPARATUS, SYSTEM AND METHOD OF INTERFACING BETWEEN A CELLULAR MANAGER AND A WLAN ACCESS DEVICE**
VORRICHTUNG, SYSTEM UND VERFAHREN ZUR SCHNITTSTELLENBILDUNG ZWISCHEN EINEM ZELLULAREN MANAGER UND EINER WLAN-ZUGANGSVORRICHTUNG
APPAREIL, SYSTÈME ET PROCÉDÉ D'INTERFAÇAGE ENTRE UN GESTIONNAIRE CELLULAIRE ET UN DISPOSITIF D'ACCÈS À UN RÉSEAU LOCAL SANS FIL (WLAN)

(30) Priority: 21.10.2013 US 201361893792 P; 26.06.2014 US 201414315551
(43) Date of publication of application: 31.08.2016
(73) Proprietor: Apple Inc., Cupertino, CA 95014 (US)
(72) Inventor: SIROTKIN, Alexander, 90901 Giv'on Hachadasha (IL); HIMAYAT, Nageen, Fremont, CA 94539 (US); HEO, Youn Hyoung, Santa Clara, CA 95054 (US); FONG, Mo-Han, Sunnyvale, CA 94089 (US)
(74) Representative: Rooney, John-Paul
(86) International application number: PCT/US2014/056894
(87) International publication number: WO 2015/060971

(56) References cited:
- WO-A1-2012/121757
- WO-A1-2013/052805
- US-A1- 2004 058 682
- US-A1- 2005 210 154
- US-A1- 2010 304 737
- US-A1- 2011 222 523
- US-A1- 2011 244 865
- US-B2- 8 095 175
- INTEL CORPORATION: "Discussion on Carrier Aggregation across LTE and Wifi", vol. RP-111094, no. 53, 13 September 2011 (2011-09-13), pages 1 - 4, XP002725489, Retrieved from the Internet <URL:http://www.3gpp.org/DynaReport/TDocExMtg--RP-53--28174.htm> [retrieved on 20140606]

## Description

### TECHNICAL FIELD

Some embodiments described herein generally relate to interfacing between a cellular manager and a Wireless Local Area network (WLAN) access device.

### BACKGROUND

A wireless communication device, e.g., a mobile device, may be configured to utilize multiple wireless communication technologies.

For example, a User Equipment (UE) device may be configured to utilize a cellular connection, e.g., a Universal Mobile Telecommunications System (UMTS) cellular connection or a Long Term Evolution (LTE) connection, as well as a wireless-local-area-network (WLAN) connection, e.g., a Wireless-Fidelity (WiFi) connection.

There is a need for efficient interworking, integration and/or management of the cellular and WLAN radio access technologies.

The following document is relevant: US 8 095 175 B2, 10 January 2012, titled "WLAN-to-WWAN handover methods and apparatus using a WLAN support node having a WWAN" which relates generally to handover methods and apparatus between heterogeneous wireless networks, such as WLANs (e.g. IEEE 802.11 based networks) and WWANs (e.g. cellular telecommunication networks), for mobile communication devices. The base station in US 8 095 175 B2 uses the same air interface to communicate with a UE and a WLAN access device.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative embodiments.
Fig. 2 is a schematic flow-chart illustration of a method of interfacing between a cellular manager and a Wireless Local Area Network (WLAN) access device, in accordance with some demonstrative embodiments.
Fig. 3 is a schematic illustration of a product, in accordance with some demonstrative embodiments.

### DETAILED DESCRIPTION

The invention is defined by the appended claims. Aspects or embodiments of the disclosure which do not fall under the scope of the claims are not included in the scope of invention.

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one embodiment," "an embodiment," "demonstrative embodiment," "various embodiments," etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

Some embodiments may be used in conjunction with various devices and systems, for example, a Personal Computer (PC), a desktop computer, a mobile computer, a laptop computer, a notebook computer, a tablet computer, a Smartphone device, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a cellular network, a cellular node, a cellular device, a Wireless Local Area Network (WLAN), a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, vending machines, sell terminals, and the like.

Some embodiments may be used in conjunction with devices and/or networks operating in accordance with existing 3rd Generation Partnership Project (3GPP) and/or Long Term Evolution (LTE) specifications (including *"TS 36.300 Evolved Universal Terrestrial Radio Access (E-UTRA) and Evolved Universal Terrestrial Radio Access Network (E-UTRAN); Overall description; Stage 2, version 11.7.0 Release 11", September 2013)* and/or future versions and/or derivatives thereof, devices and/or networks operating in accordance with existing Wireless-Gigabit-Alliance (WGA) specifications (*Wireless Gigabit Alliance, Inc WiGig MAC and PHY Specification Version 1.1, April 2011, Final specification)* and/or future versions and/or derivatives thereof, devices and/or networks operating in accordance with existing IEEE 802.11 standards (*IEEE 802.11-2012, IEEE Standard for Information technologyTelecommunications and information exchange between systems Local and metropolitan area networks--Specific requirements Part 11: Wireless LAN Medium Access Control (MAC) and Physical Layer (PHY) Specifications, March 29, 2012),* and/or future versions and/or derivatives thereof, devices and/or networks operating in accordance with existing IEEE 802.16 standards *(IEEE-Std 802.16, 2009 Edition, Air Interface for Fixed Broadband Wireless Access Systems; IEEE-Std 802.16e, 2005 Edition, Physical and Medium Access Control Layers for Combined Fixed and Mobile Operation in Licensed Bands; amendment to IEEE Std 802.16-2009, developed by Task Group m)* and/or future versions and/or derivatives thereof, devices and/or networks operating in accordance with existing *WirelessHD^{™}* specifications and/or future versions and/or derivatives thereof, units and/or devices which are part of the above networks, and the like.

Some embodiments may be used in conjunction with one or more types of wireless communication signals and/or systems, for example, Radio Frequency (RF), Frequency-Division Multiplexing (FDM), Orthogonal FDM (OFDM), Single Carrier Frequency Division Multiple Access (SC-FDMA), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wireless Fidelity (Wi-Fi), Wi-Max, ZigBee^{™}, Ultra-Wideband (UWB), Global System for Mobile communication (GSM), second generation (2G), 2.5G, 3G, 3.5G, 4G, Fifth Generation (5G) mobile networks, 3GPP, Long Term Evolution (LTE) cellular system, LTE advance cellular system, High-Speed Downlink Packet Access (HSDPA), High-Speed Uplink Packet Access (HSUPA), High-Speed Packet Access (HSPA), HSPA+, Single Carrier Radio Transmission Technology (1XRTT), Evolution-Data Optimized (EV-DO), Enhanced Data rates for GSM Evolution (EDGE), and the like. Other embodiments may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative embodiments, a wireless device may be or may include a peripheral that is integrated with a computer, or a peripheral that is attached to a computer. In some demonstrative embodiments, the term "wireless device" may optionally include a wireless service.

The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

Some demonstrative embodiments are described herein with respect to a LTE network. However, other embodiments may be implemented in any other suitable cellular network or system, e.g., a Universal Mobile Telecommunications System (UMTS) cellular system, a 3G cellular network, a 4G cellular network, a 5G cellular network, a WiMax cellular network, and the like.

Some demonstrative embodiments are described herein with respect to a WLAN system. However, other embodiments may be implemented in any other suitable non-cellular network.

Some demonstrative embodiments are described herein with respect to an Access Point (AP). However, other embodiments may be implemented in any other WLAN access device, for example, an Access Controller (AC).

Some demonstrative embodiments may be used in conjunction with a Heterogeneous Network (HetNet), which may utilize a deployment of a mix of technologies, frequencies, cell sizes and/or network architectures, e.g., including cellular, mmWave, and/or the like. In one example, the HetNet may include a radio access network having layers of different-sized cells ranging from large macrocells to small cells, for example, picocells and femtocells.

Other embodiments may be used in conjunction with any other suitable wireless communication network.

The term "antenna", as used herein, may include any suitable configuration, structure and/or arrangement of one or more antenna elements, components, units, assemblies and/or arrays. In some embodiments, the antenna may implement transmit and receive functionalities using separate transmit and receive antenna elements. In some embodiments, the antenna may implement transmit and receive functionalities using common and/or integrated transmit/receive elements. The antenna may include, for example, a phased array antenna, a single element antenna, a dipole antenna, a set of switched beam antennas, and/or the like.

The term "cell", as used herein, may include a combination of network resources, for example, downlink and optionally uplink resources. The resources may be controlled and/or allocated, for example, by a cellular node (also referred to as a "base station"), or the like. The linking between a carrier frequency of the downlink resources and a carrier frequency of the uplink resources may be indicated in system information transmitted on the downlink resources.

The phrase "access point" (AP), as used herein, may include an entity that includes a station (STA) and provides access to distribution services, via the Wireless Medium (WM) for associated STAs.

The term "station" (STA), as used herein, may include any logical entity that is a singly addressable instance of a medium access control (MAC) and a physical layer (PHY) interface to the WM.

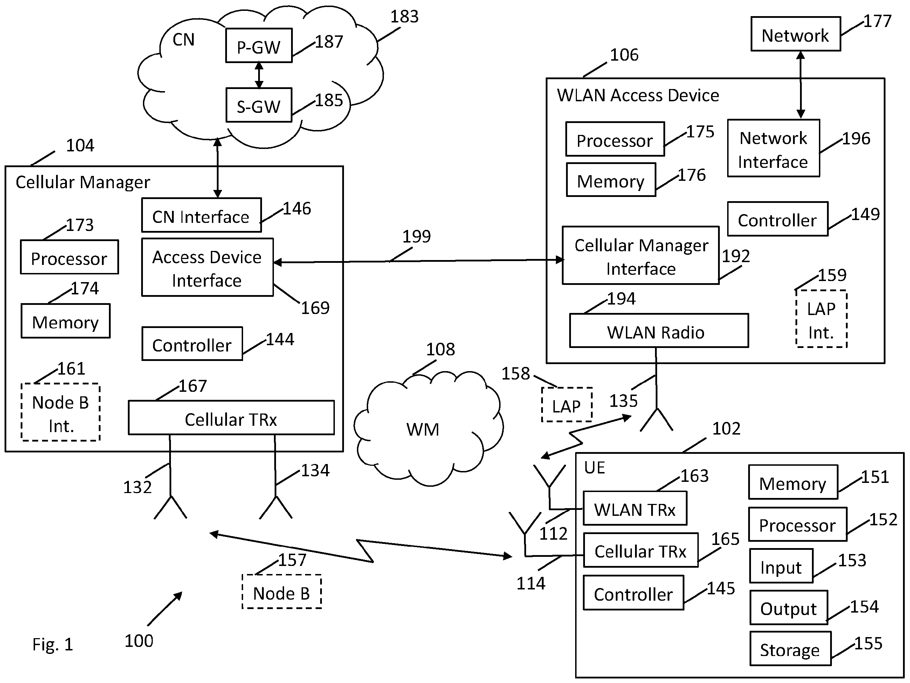

Reference is now made to Fig. 1, which schematically illustrates a block diagram of a system 100, in accordance with some demonstrative embodiments.

As shown in Fig. 1, in some demonstrative embodiments, system 100 may include one or more wireless communication devices capable of communicating content, data, information and/or signals via one or more wireless mediums 108. For example, system 100 may include at least one User Equipment (UE) 102 capable of communicating with one or more wireless communication networks, e.g., as described below.

Wireless mediums 108 may include, for example, a radio channel, a cellular channel, an RF channel, a Wireless Fidelity (WiFi) channel, an IR channel, and the like. One or more elements of system 100 may optionally be capable of communicating over any suitable wired communication links.

In some demonstrative embodiments, system 100 may include at least one cellular manager 104 to manage communication of a cellular network, e.g., as described below.

In some demonstrative embodiments, cellular manager 104 may perform the functionality of an Evolved Node B (eNB). For example, cellular manager 104 may be configured to perform radio resource management (RRM), radio bearer control, radio admission control (access control), connection mobility management, resource scheduling between UEs and eNB radios, e.g., Dynamic allocation of resources to UEs in both uplink and downlink, header compression, link encryption of user data streams, packet routing of user data towards a destination, e.g., another eNB or an Evolved Packet Core (EPC), scheduling and/or transmitting paging messages, e.g., incoming calls and/or connection requests, broadcast information coordination, measurement reporting, and/or any other operations.

In other embodiments, cellular manager 104 may include any other functionality and/or may perform the functionality of any other cellular node, network controller, base station or any other node or network device.

In one example, cellular manager 104 may be part of a UMTS. According to this example, cellular manager 104 may perform the functionality of a Radio Network Controller (RNC), which may control a plurality of Node B devices 157. For example, the node B may be configured to communicate directly with UEs, e.g., including UE 102, for example, using a Wideband Code Division Multiple Access (WCDMA) and/or Time Division Synchronous Code Division Multiple Access (TD-SCDMA) air interface technology. The RNC may include, for example, a UMTS RNC configured to control the Node B devices 157.

In some demonstrative embodiments, system 100 may include a WLAN access device 106 to manage access to a non-cellular network 107, for example, a WLAN, e.g., a Basic Service Set (BSS).

In some demonstrative embodiments, WLAN access device 106 may include a WLAN AP, e.g., as described below.

In other embodiments, WLAN access device 106 may include any other functionality and/or may perform the functionality of any other device capable of controlling and/or managing WLAN radio access to one or more wired networks.

In one example, WLAN access device 106 may perform the functionality of an Access Controller (AC). According to this example, WLAN access device 106 may control a plurality of AP devices, e.g., Lightweight Access Point (LAP) devices 158.

In some demonstrative embodiments, UE 102 may include, for example, a mobile computer, a laptop computer, a notebook computer, a tablet computer, an Ultrabook^{™} computer, a mobile internet device, a handheld computer, a handheld device, a storage device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a mobile phone, a cellular telephone, a PCS device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a video device, an audio device, an A/V device, a gaming device, a media player, a Smartphone, or the like.

In some demonstrative embodiments, UE 102, cellular manager 104 and/or WLAN access device 106 may include one or more communication interfaces to perform communication between UE 102, cellular manager 104, WLAN access device 106 and/or with one or more other wireless communication devices, e.g., as described below.

Some demonstrative embodiments include an interface (also referred to as "the access device interface", "the horizontal interface", "the Xn-W interface" or "the cellular/WLAN interface"), which may be configured to directly interface between a cellular network element, e.g., cellular manager 104, and a WLAN element, e.g., WLAN access device 106, as described in detail below.

In some demonstrative embodiments, the cellular/WLAN interface may be implemented to directly interface between an eNB and a WLAN AP, e.g., as described below. However, in other embodiments, the cellular/WLAN interface may be implemented to directly interface between any other cellular device and any other WLAN device. In one example, the cellular/WLAN interface may be implemented to directly interface between an eNB and a WLAN AC. In another example, the cellular/WLAN interface may be implemented to directly interface between a UMTS RNC and a WLAN AP. In another example, the cellular/WLAN interface may be implemented to directly interface between a UMTS RNC and a WLAN AC.

In some demonstrative embodiments, the cellular/WLAN interface may be utilized to enhance and/or increase the efficiency of interworking, integration and/or management of the cellular and WLAN radio access technologies, e.g., as described below.

In some demonstrative embodiments, the horizontal interface may be utilized to improve efficiency of resource management, to provide efficient load balancing, and/or to improve mobility between Radio Access Technology (RAT) networks, e.g., as described below.

In some demonstrative embodiments, cellular manager 104 includes an interface ("Core Network (CN) interface") 146, e.g., a vertical interface, to communicate with one or more elements of a CN 183, e.g., an Evolved Packet Core (EPC).

In some demonstrative embodiments, CN interface 146 may include an S1 vertical interface configured to communicate between cellular manager 104 and a Serving Gateway (S-GW) 185 according to an S1 protocol, e.g., if cellular manager 104 performs the functionality of an eNB. According to this example, S-GW 187 may interface between cellular manager 104 and a Packet Data Network (PDN) Gateway (P-GW) 187.

In other embodiments, CN interface 146 may include any other vertical interface with one or more elements of CN 183. For example, cellular manger 104 may perform the functionality of an RNC, e.g., in a UMTS system. According to this example, CN interface 146 may include an Interface Unit Circuit Switch (Iu-CS) interface and/or an Interface Unit Packet Switch (Iu-PS) interface, to interface between the RNC and one or more packet-switched or circuit-switched CN elements.

In some demonstrative embodiments, cellular manager 104 may include an interface to communicate user plane traffic, directly or indirectly, between CN 183 and UE 102.

In some demonstrative embodiments, cellular manager 104 may communicate the user plane traffic directly with UE 102, for example, if cellular manager 104 performs the functionality of an eNB. According to these embodiments, cellular manager 104 includes an air interface, for example, a cellular transceiver (TRx) 167, configured to communicate with UE 102 via a cellular link.

In other embodiments, cellular manager 104 may communicate the user plane traffic with UE 102 via Node B 157, e.g., if cellular manager 104 performs the functionality of an RNC. According to these embodiments, cellular manager 104 may include a Node B interface 161 to communicate between the RNC and Node B 157. For example, Node B interface 161 may include an Interface Unit b (Iub).

In some demonstrative embodiments, cellular manager 104 includes an access device interface 169 to communicate directly with WLAN access device 106, e.g., as described below. In one example, interface 169 may include an AP interface, e.g., if WLAN access device 106 performs the functionality of an AP. In another example, interface 169 may include an AC interface, e.g., if WLAN access device 106 performs the functionality of an AC.

In some demonstrative embodiments, WLAN access device 106 may include a cell manager interface ("the cellular interface") 192 to communicate directly with cellular manager 104, e.g., as described below. In one example, interface 192 may include an eNB interface, e.g., if cellular manager 104 performs the functionality of an eNB. In another example, interface 192 may include a RNC interface, e.g., if cellular manager 104 performs the functionality of a RNC.

In some demonstrative embodiments, interfaces 169 and 192 may be configured to communicate between cellular manager 104 and WLAN access device 106 via a direct link 199, e.g., as described below.

In some demonstrative embodiments, link 199 may include a Point to Point (P2P) link, e.g., as described below.

In some demonstrative embodiments, link 199 may be implemented by any wired and/or wireless link, e.g., using any suitable, Physical Layer (PHY) components and/or protocols.

In some demonstrative embodiments, link 199 may include a wired link.

In some demonstrative embodiments, link 199 may include a wireless link, for example, a microwave link or a WLAN link, a WiFi link, a Bluetooth link, and/or any other wireless link. In some demonstrative embodiments, link 199 may include any wired link.

In some demonstrative embodiments, WLAN access device 106 may include a network interface 196 to communicate network traffic with a wired network 177, e.g., the Internet or any other network.

In some demonstrative embodiments, WLAN access device 104 may include an interface to communicate the network traffic and/or any other traffic, directly or indirectly, with UE 102.

In some demonstrative embodiments, WLAN access device 106 may communicate directly with UE 102, for example, if WLAN access device 106 performs the functionality of an AP. According to these embodiments, WLAN access device 106 may include a WLAN radio 194 to communicate the network traffic and/or any other traffic directly with UE 102, e.g., via a WLAN link between WLAN access device 106 and UE 102, for example, if WLAN access device 106 performs the functionality of an AP.

In some demonstrative embodiments, WLAN access device 106 may indirectly communicate with UE 102, for example, if WLAN access device 106 performs the functionality of an AC. According to these embodiments, WLAN access device 106 may include an AP interface, e.g., a LAP interface 159, to communicate the network traffic and/or any other traffic with LAP 158.

In some demonstrative embodiments, UE 102 may include a WLAN transceiver (TRx) 163 configured to communicate with a WLAN device, e.g., with WLAN access device 106 and/or with LAP 158, via the WLAN link.

In some demonstrative embodiments, UE 102 may include a cellular transceiver (TRx) 165 configured to communicate with a cellular device, e.g., cellular manager 104 and/or Node B 157, via the cellular link.

In some demonstrative embodiments, WLAN access device 106 may include at least one controller 149 to control communications performed by WLAN access device 106, cellular manager 104 may include at least one controller 144 to control communications performed by cellular manager 104, and/or UE 102 may include at least one controller 145 to control communications performed by UE 102, e.g., as described below.

In some demonstrative embodiments, WLAN TRx 163, cellular TRx 165, cellular TRx 167 and/or WLAN radio 194 may include one or more wireless transmitters, receivers and/or transceivers able to send and/or receive wireless communication signals, RF signals, frames, blocks, transmission streams, packets, messages, data items, and/or data.

In some demonstrative embodiments, cellular TRx 167 and/or cellular TRx 165 may include a multiple input multiple output (MIMO) transmitters receivers system (not shown), which may be capable of performing antenna beamforming methods, if desired. In other embodiments, cellular TRx 167 and/or cellular TRx 165 may include any other transmitters and/or receivers.

In some demonstrative embodiments, cellular TRx 167 and/or cellular TRx 165 may include LTE, WCDMA and/or TD-SCDMA modulators and/or demodulators (not shown) configured to communicate downlink signals over downlink channels, e.g., between cellular manager 104 and UE 102, and uplink signals over uplink channels, e.g., between UE 102 and cellular manager 104. In other embodiments, cellular TRx 167 and/or cellular TRx 165 may include any other modulators and/or demodulators.

In some demonstrative embodiments, UE 102 may establish a WLAN link with WLAN access device 106. For example, WLAN TRx 163 may perform the functionality of one or more STAs, e.g., one or more WiFi STAs, WLAN STAs, and/or DMG STAs. The WLAN link may include an uplink and/or a downlink. The WLAN downlink may include, for example, a unidirectional link from WLAN access device 106 to the one or more STAs. The uplink may include, for example, a unidirectional link from a STA to WLAN access device 106.

In some demonstrative embodiments, UE 102, WLAN access device 106 and/or cellular manager 104 may include, or may be associated with, one or more antennas. In one example, WLAN TRx 163 and cellular TRx 165 may be associated with at least two antennas, e.g., antennas 112 and 114, or any other number of antennas, e.g., one antenna or more than two antennas; cellular TRx 167 may be associated with at least two antennas, e.g., antennas 132 and 134, or any other number of antennas, e.g., one antenna or more than two antennas; and/or WLAN radio 194 may be associated with one or more antennas 135.

In some demonstrative embodiments, antennas 112, 114, 132, 134 and/or 135 may include any type of antennas suitable for transmitting and/or receiving wireless communication signals, blocks, frames, transmission streams, packets, messages and/or data. For example, antennas 112, 114, 132, 134 and/or 135 may include any suitable configuration, structure and/or arrangement of one or more antenna elements, components, units, assemblies and/or arrays. For example, antennas 112, 114, 132, 134 and/or 135 may include a phased array antenna, a dipole antenna, a single element antenna, a set of switched beam antennas, and/or the like.

In some embodiments, antennas 112, 114, 132, 134 and/or 135 may implement transmit and receive functionalities using separate transmit and receive antenna elements. In some embodiments, antennas 112, 114, 132, 134 and/or 135 may implement transmit and receive functionalities using common and/or integrated transmit/receive elements.

In some demonstrative embodiments, cellular manager 104, WLAN access device 106, and/or UE 102 may also include, for example, one or more of a processor, an input unit, an output unit, a memory unit, and/or a storage unit. For example, cellular manager 104 may include a processor 173 and a memory 174; WLAN access device 106 may include a processor 175 and a memory 176; and/or UE 102 may include a memory 151, a processor 152, an input unit 153, an output unit 154, and/or a storage unit 155. UE 102, cellular manager 104 and/or WLAN access device 106 may optionally include other suitable hardware components and/or software components. In some demonstrative embodiments, some or all of the components of one or more of UE 102, cellular manager 104 and/or WLAN access device 106 may be enclosed in a common housing or packaging, and may be interconnected or operably associated using one or more wired or wireless links. In other embodiments, components of one or more of UE 102, cellular manager 104 and/or WLAN access device 106 may be distributed among multiple or separate devices.

Processors 173, 175 and/or 152 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multipurpose or specific processor or controller. For example, processor 173 may execute instructions, for example, of an Operating System (OS) of cellular manager 104and/or of one or more suitable applications; processor 175 may execute instructions of an OS of WLAN access device 106 and/or of one or more suitable applications; and/or processor 152 may execute instructions of an OS of UE 102 and/or of one or more suitable applications.

Input unit 153 includes, for example, a keyboard, a keypad, a mouse, a touch-screen, a touch-pad, a track-ball, a stylus, a microphone, or other suitable pointing device or input device. Output unit 154 includes, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

Memory unit 174, 176 and/or 151 includes, for example, a Random Access Memory (RAM), a Read Only Memory (ROM), a Dynamic RAM (DRAM), a Synchronous DRAM (SDRAM), a flash memory, a volatile memory, a non-volatile memory, a cache memory, a buffer, a short term memory unit, a long term memory unit, or other suitable memory units. Storage unit 155 includes, for example, a hard disk drive, a floppy disk drive, a Compact Disk (CD) drive, a CD-ROM drive, a DVD drive, or other suitable removable or non-removable storage units. For example, memory unit 174 may store data processed by cellular manager 104; and/or memory unit 176 may store data processed by WLAN access device 106.

In some demonstrative embodiments, UE 102 may be configured utilize a cellular connection, e.g., a LTE cellular connection or any other cellular connection, to communicate with cellular manager 104, and a WLAN connection, e.g., a Wireless-Fidelity (WiFi) connection, a mmWave connection, a P2P connection, or any other WLAN connection, to communicate with WLAN access device 106.

In some demonstrative embodiments, one or more elements of system 100 may perform the functionality of a HetNet, which may utilize a deployment of a mix of technologies, frequencies, cell sizes and/or network architectures, for example, including cellular, WLAN, and/or the like.

For example, the HetNet may be configured to provide a service through a first wireless communication environment, e.g., a cellular network, and to maintain the service when switching to another communication environment, e.g., WLAN. The HetNet architecture may enable utilizing a mixture of wireless communication environments, e.g., a WLAN environment and a cellular environment, for example, to optimally respond to rapid changes in customer demand, reduce power consumption, reduce cost, increase efficiency and/or achieve any other benefit.

In one example, system 100 may utilize a Multi-tier, Multi-Radio Access Technology (Multi-RAT) Het-Net architecture, including a tier of small cells, e.g., pico, femto, relay stations, WiFi APs, and the like, overlaid on top of a macro cellular deployment to augment network capacity.

In another example, system 100 may utilize Multi-RAT small cells integrating multiple radios such as WiFi and 3GPP air interfaces in a single infrastructure device.

In other embodiments, system 100 may implement any other architecture and/or deployment.

In some demonstrative embodiments, cellular manager 104 and WLAN access device 106 may be configured to communicate directly via interface 199, for example, to enhance and/or increase the efficiency of interworking, integration and/or management of the cellular and WLAN radio access technologies, e.g., as described below.

In some demonstrative embodiments, cellular manager 104 and WLAN access device 106 may be configured to communicate directly via interface 199, for example, to improve efficiency of resource management, to provide efficient load balancing, and/or to improve mobility between Radio Access Technology (RAT) networks, e.g., as described below.

In some demonstrative embodiments, cellular manager 104 and WLAN access device 106 may be configured to communicate user plane messages and/or control plane messages via interface 199, e.g., as described below.

In some demonstrative embodiments, cellular manager 104 and WLAN access device 106 may be configured to communicate via interface 199 user plane packets including user plane traffic corresponding to UE 102, e.g., as described below.

In some demonstrative embodiments, the user plane packets may include downlink traffic to be provided to UE 102, e.g., as described below.

In some demonstrative embodiments, the downlink traffic includes downlink traffic from CN 183 ("the CN downlink traffic"), e.g., as described below.

In some demonstrative embodiments, cellular manager 104 may receive the CN downlink traffic, e.g., via CN interface 146. Cellular manager 104 may use access device interface 169 to send the CN downlink traffic to WLAN access device 106. According to these embodiments, WLAN access device 106 may receive the CN download traffic from cellular manager 104, e.g., via interface 192, and may send the CN download traffic to UE 102 via the WLAN.

In one example, WLAN access device 106 may directly transmit the CN downlink traffic to UE 102, e.g., via WLAN radio 194, for example, if WLAN access device 106 performs the functionality of an AP.

In another example, WLAN access device 106 may send the CN downlink traffic to UE 102 via LAP 158, e.g., via LAP interface 159, for example, if WLAN access device 106 performs the functionality of an AC.

In some demonstrative embodiments, the downlink traffic may include downlink traffic from network 177 ("the network downlink traffic"), e.g., as described below.

In some demonstrative embodiments, WLAN access device 106 may receive the network downlink traffic, e.g., via network interface 196. WLAN access device 106 may use interface 192 to send the network downlink traffic to cellular manager 104. According to these embodiments, cellular manager 104 receives the network download traffic from WLAN access device 106, e.g., via interface 169, and sends the network download traffic to UE 102 via the cellular network.

In one example, cellular manager 104 may directly transmit the network downlink traffic to UE 102, e.g., via cellular TRx 167, for example, if cellular manager 104 performs the functionality of an eNB.

In another example, cellular manager 104 may send the network downlink traffic to UE 102 via Node B 157, e.g., via interface 161, for example, if cellular manager 104 performs the functionality of a RNC.

In some demonstrative embodiments, transferring the downlink traffic between cellular manager 104 and WLAN access device 106 via interface 199 may enable for example, to enhance, e.g., optimize, mobility of UE 102 between the cellular and WLAN radio networks.

In some demonstrative embodiments, cellular manager 104 and WLAN access device 106 may utilize interface 199 to forward downlink user packets, for example, during handover of UE 102 from a first RAT ("the source RAT") to a second RAT ("the target RAT"). For example, cellular manager 104 and WLAN access device 106 may utilize interface 199 to forward downlink user packets, which may be buffered in the source RAT, to the target RAT, e.g., in order to reduce and/or prevent packet loss.

In one example, the source RAT may include the cellular RAT and the target RAT may include the WLAN RAT, e.g., during handover of UE 102 from a cellular node to a WLAN AP. According to this example, cellular manager 104 may send the CN downlink traffic to WLAN access device 106 via interface 199, for example, during handover of UE 102 from the cellular network to the WLAN.

In another example, the source RAT may include the WLAN RAT and the target RAT may include the cellular RAT, e.g., during handover of UE 102 from a WLAN AP to a cellular node. According to this example, WLAN access device 106 may send the network downlink traffic to cellular manager 104 via interface 199, for example, during handover of UE 102 from the WLAN to the cellular network.

In some demonstrative embodiments, cellular manager 104 and WLAN access device 106 may be configured to operate according to an anchor-booster architecture, e.g., as described below.

In some demonstrative embodiments, the anchor-booster architecture is configured to provide to UE 102 dual connectivity, for example, to both the cellular RAT and the WLAN RAT, e.g., simultaneously.

In some demonstrative embodiments, when operating according to the anchor-booster architecture, cellular manager may perform the functionality of an anchor cell, which may be configured to route traffic between CN 183 and UE 102; and WLAN access device 106 may be perform the functionality of a booster cell, which may be configured to forward at least some of the traffic to UE 102, e.g., as described below.

In some demonstrative embodiments, controller 144 may select to forward CN downlink traffic ("the forwarded traffic") to WLAN access device 104, for example, if WLAN access is available to UE 102. For example, the forwarded traffic may be sent from cellular manager 104 to WLAN access device 106 over link 199, e.g., via interfaces 169 and 192.

In some demonstrative embodiments, WLAN access device 104 may send the forwarded traffic to UE 102 via the WLAN. For example, controller 149 may control WLAN radio 194 to transmit the forwarded traffic to UE 102 via the WLAN link, e.g., if WLAN access device 104 performs the functionality of an AP. In another example, controller 149 may control interface 159 the send the forwarded traffic to LAP 158, e.g., if WLAN access device 104 performs the functionality of an AC.

In some demonstrative embodiments, the anchor-booster architecture may enable communicating traffic with UE 102 via both cellular access and WLAN access simultaneously.

In some demonstrative embodiments, the traffic communicated via the booster cell may utilize WLAN security and/or authentication provided by the WLAN, or cellular security and/or authentication provided by cell manager 104, e.g., depending on a protocol used to split the traffic between the cellular and WLAN RATs.

In some demonstrative embodiments, the anchor-booster architecture may allow selectively splitting the traffic between the cellular and WLAN RATs, for example, on a per-bearer basis, e.g., different bearers may be sent via different RATs, or a single bearer may be split between the WLAN and cellular RATs.

In some demonstrative embodiments, controller 149 may dynamically split the CN downlink traffic between the cellular and WLAN RATs. For example, controller 149 may select to forward first downlink traffic to UE 102 via the booster cell, and to send second downlink traffic via the cellular network.

In some demonstrative embodiments, controller 149 may control interface 169 to send the first downlink traffic to WLAN access device 106, e.g., via link 199. Controller 149 may control cellular TRx 167 to transmit the second downlink traffic to UE 102 via the cellular link, e.g., if cellular manager 104 performs the functionality of an eNB. Controller 149 may control interface 161 to send the second downlink traffic to Node B 157, e.g., if cellular manager 104 performs the functionality of a RNC.

In some demonstrative embodiments, the first and second downlink traffic may include downlink traffic of a same radio bearer. In other embodiments, the first and second downlink traffic may include downlink traffic of different radio bearers.

In some demonstrative embodiments, cellular manager 104 and WLAN access device 106 may be configured to communicate via interface 199 control plane messages to control one or more operations and/or functionalities of cellular manager 104 and WLAN access device 106, e.g., as described below.

In some demonstrative embodiments, the control plane messages may include load-related information corresponding to a load of the WLAN and/or the cellular network, e.g., as described below.

In some demonstrative embodiments, WLAN access device 106 may send load-related information to cellular manager 104 via link 199. The load-related information may include information corresponding to a WLAN load of the WLAN controlled by WLAN access device 104. For example, the load-related information may include an actual load, for example, a Basis Service Set (BSS) load of a BSS controlled by WLAN access device 106, a station count of a number of stations connected to the BSS, a backhaul data rate, interference information, and/or any other information and/or parameters.

In some demonstrative embodiments, WLAN access device 106 and cellular manager 104 may be configured to communicate the load-related information over link 199, for example, to enhance the efficiency of usage of radio resources and/or to enhance load balancing between the cellular and WLAN RATs.

In some demonstrative embodiments, WLAN access device 106 and cellular manager 104 may be configured to communicate the load-related information over link 199 in a periodic manner. For example, WLAN access device 104 may periodically send the load-related information to cellular manger 106.

In some demonstrative embodiments, cellular manager 104 may be configured to trigger WLAN access device 106 to send the load-related information via link 199. For example, interface 169 may send to interface 192 a request for a load report via link 199, and interface 192 may send to interface 169 a load report including the load-related information.

In some demonstrative embodiments, WLAN access device 106 may be configured to trigger the sending of the load-related information to cellular manager 104 via link 199. For example, controller 149 may detect an overload condition corresponding to the WLAN, and controller 149 may control interface 192 to send to cellular manager 104 an indication of an overload start event and/or and overload stop event, e.g. via link 199.

In some demonstrative embodiments, the control plane messages may include configuration information corresponding to a configuration of the cellular and/or WLAN networks.

In some demonstrative embodiments, the control plane messages may include WLAN identification information to identify one or more other WLAN access devices. For example, controller 149 may control interface 192 to send to cellular manager 104 control plane messages including identifiers of one or more other WLAN access devices. The identifiers may include, for example, a Service Set Identifier (SSID), a Hot Spot (HS) 2.0 identifier, and/or any other WLAN identifier.

In some demonstrative embodiments, interface 169 may receive the WLAN identification information, and controller 144 may utilize the WLAN identification information to configure communication with the one or more WLAN access devices. For example, enabling WLAN access device 104 to provide the WLAN identification information to cellular manager 104 via link 199 may enable, for example, reducing Operations, Administration and Management (OAM) processes.

In some demonstrative embodiments, the control plane messages may include UE context information corresponding to UE 102. For example, controller 144 may control interface 169 to send to WLAN access device 106 UE context information corresponding to UE 102.

In some demonstrative embodiments, the UE context information may include, for example, security information corresponding to UE 102, an IP address assigned to UE 102 and/or any other context corresponding to UE 102.

In some demonstrative embodiments, cellular manager 104 may send the UE context information to WLAN access device 104 via link 199, for example, prior to handover of UE 102 to WLAN access device 104.

In some demonstrative embodiments, the ability to transfer the UE context information from cellular manager 104 to WLAN access device 104 via link 199 may enable, for example, to reduce WLAN connection time of UE 102, e.g., during the handover to WLAN access device 106.

In some demonstrative embodiments, the control plane messages may include, for example, one or more booster cell management messages to manage WLAN access device 106 as the booster cell, e.g., as described above.

In some demonstrative embodiments, cellular manager 104 may send via link 199 an indication or request to WLAN access device 106 to add or remove WLAN access device 106 as a booster cell.

In some demonstrative embodiments, cellular manager 104 may use link 199 to indicate to WLAN access device 106 a configuration of the anchor-booster architecture, for example, to inform WLAN access device 106, which WLAN identifiers are to be used by WLAN access device 106.

In some demonstrative embodiments, WLAN access device 106 may use link 199 to send to cellular manager a request to reconfigure or remove the functionality of WLAN access device 106 as the booster cell.

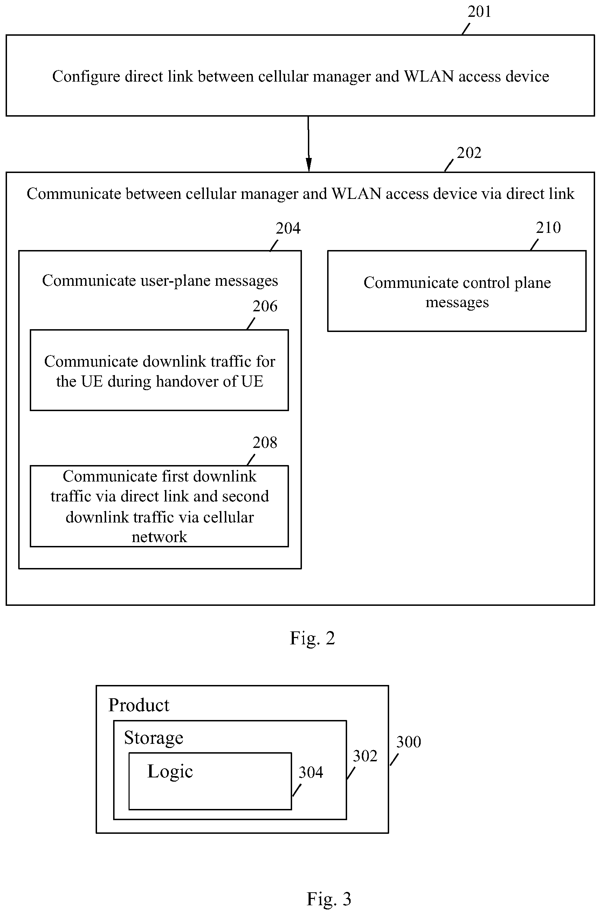

Reference is made to Fig. 2, which schematically illustrates a method of interfacing between a cellular manager and a WLAN access device, in accordance with some demonstrative embodiments. In some embodiments, one or more of the operations of the method of Fig. 2 may be performed by a wireless communication system e.g., system 100 (Fig. 1); a cellular manager, e.g., cellular manager 104 (Fig. 1); a WLAN access device, e.g., WLAN access device 106 (Fig. 1); an interface, e.g., interface 169 (Fig. 1), interface 167 (Fig. 1), interface 192 (Fig. 1), interface 161 (Fig. 1), interface 159 (Fig. 1), and/or interface 194 (Fig. 1); and/or a controller, e.g., controller 144 (Fig. 1) and/or controller 149 (Fig. 1).

As indicated at block 202, the method may include communicating between a cellular manager and a WLAN access device via a direct link between the cellular manager and the WLAN access device. For example, cellular manager 104 (Fig. 1) may utilize interface 169 (Fig. 1), and WLAN access device 106 (Fig. 1) may utilize interface 192 (Fig. 1), to communicate via direct link 199 (Fig. 1) between cellular manager 104 (Fig. 1) and WLAN access device 106 (Fig. 1), e.g., as described above.

As indicated at block 201, the method may include configuring the direct link between the cellular manager and the WLAN access device. For example, interfaces 169 (Fig. 1) and 192 (Fig. 1) may exchange one or more control plane messages to configure link 199 (Fig. 1), e.g., as described above.

As indicated at block 204, the method may include communicating one or more user plane messages between the cellular manager and the WLAN access device via the direct link between. For example, cellular manager 104 (Fig. 1) and WLAN access device 106 (Fig. 1) may communicate one or more user plane messages including traffic corresponding to UE 102 (Fig. 1) via link 199 (Fig. 1), e.g., as described above.

As indicated at block 206, communicating the user plane control messages may include communicating downlink traffic during handover of a UE between the cellular manager and the WLAN access device. For example, cellular manager 104 (Fig. 1) and WLAN access device 106 (Fig. 1) may communicate downlink traffic for UE 102 (Fig. 1) during handover of UE 102 (Fig. 1), e.g., as described above.

As indicated at block 208, communicating the user plane control messages may include sending first CN downlink traffic to the UE via the WLAN access device, and sending second CN downlink traffic to the UE via the cellular network. For example, cellular manager 104 (Fig. 1) and WLAN access device 106 (Fig. 1) may route the CN downlink traffic to UE 102 (Fig. 1) according to the anchor-booster architecture, e.g., as described above.

As indicated at block 210, the method may include communicating one or more control plane messages between the cellular manager and the WLAN access device via the direct link between. For example, cellular manager 104 (Fig. 1) and WLAN access device 106 (Fig. 1) may communicate one or more control plane messages via link 199 (Fig. 1), e.g., as described above.

Reference is made to Fig. 3, which schematically illustrates a product of manufacture 300, in accordance with some demonstrative embodiments. Product 300 may include a non-transitory machine-readable storage medium 302 to store logic 304, which may be used, for example, to perform at least part of the functionality of a cellular manager, e.g., cellular manager 104 (Fig. 1); a WLAN access device, e.g., WLAN access device 106 (Fig. 1); an interface, e.g., interface 169 (Fig. 1), interface 167 (Fig. 1), interface 192 (Fig. 1), interface 161 (Fig. 1), interface 159 (Fig. 1), and/or interface 194 (Fig. 1); and/or a controller, e.g., controller 144 (Fig. 1) and/or controller 149 (Fig. 1); and/or to perform one or more operations of the method of Fig 2. The phrase "non-transitory machine-readable medium" is directed to include all computer-readable media, with the sole exception being a transitory propagating signal.

In some demonstrative embodiments, product 300 and/or machine-readable storage medium 302 may include one or more types of computer-readable storage media capable of storing data, including volatile memory, non-volatile memory, removable or non-removable memory, erasable or non-erasable memory, writeable or re-writeable memory, and the like. For example, machine-readable storage medium 302 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride- oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative embodiments, logic 304 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative embodiments, logic 304 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object- oriented, visual, compiled and/or interpreted programming language, such as C, C++, Java, BASIC, Matlab, Pascal, Visual BASIC, assembly language, machine code, and the like.

Functions, operations, components and/or features described herein with reference to one or more embodiments, may be combined with, or may be utilized in combination with, one or more other functions, operations, components and/or features described herein with reference to one or more other embodiments, or vice versa.

## Claims

1. A base station configured to manage communication of a cellular network, the base station comprising:
a vertical interface (146) to communicate with a Core Network, CN;
an air interface (167) to communicate with a User Equipment, UE, via a cellular link; and
an access device interface (169) to communicate directly with a Wireless Local Area Network, WLAN, access device configured for direct communication with the UE using a WLAN radio, the WLAN access device configured to manage access to a WLAN and including a WLAN Access Point, AP, or a WLAN Access Controller, AC;
wherein during handover of said UE from the WLAN to the cellular network:
said access device interface (169) is to receive from said WLAN access device (106) network downlink traffic, from a wired network (177), for said UE (102); and
the base station configured to directly transmit the network downlink traffic to the UE (102) via the cellular air interface (167);
wherein during handover of said UE from said base station to the WLAN access device:
said access device interface (169) is to send to said WLAN access device (106) CN downlink traffic, from the CN (183), for said UE; and
wherein when providing the UE dual connectivity:
said access device interface (169) is to send to said WLAN access device (106) first downlink traffic for said UE (102); and
said air interface (167) is to send second downlink traffic to said UE via said cellular link.

2. The base station of claim 1, wherein said access device interface (169) is to communicate with said WLAN access device (106) user plane traffic corresponding to said UE (102).

3. The base station of either one of claims 1 or 2, wherein said access device interface (169) is to communicate one or more control plane messages with said WLAN access device (106).

4. The base station of claim 3, wherein said access device interface (169) is to receive from said WLAN access device (106) a control plane message including load-related information corresponding to a load of said WLAN AP.

5. The base station of claim 3, wherein said access device interface is to send to said WLAN access device a control plane message including UE context information corresponding to said UE.

6. The base station of claim 3, wherein, when providing the UE dual connectivity, said control plane messages comprise one or more booster cell management messages to manage said WLAN access device (106) as a booster cell.

7. The base station of any one of claims 1-6 comprising:
a plurality of antennas;
a memory; and
a processor.

## Patentansprüche

1. Basisstation, die konfiguriert ist, um die Kommunikation eines Mobilfunknetzes zu verwalten, die Basisstation umfassend:
eine vertikale Schnittstelle (146), um mit einem Kernnetz, CN, zu kommunizieren;
eine Luftschnittstelle (167), um mit einem Benutzergerät, UE, über eine Mobilfunkverbindung zu kommunizieren; und
eine Zugangsvorrichtungsschnittstelle (169), um direkt mit einer Zugangsvorrichtung eines drahtlosen lokalen Netzes, WLAN, zu kommunizieren, die für die direkte Kommunikation mit dem UE unter Verwendung eines WLAN-Funkgeräts konfiguriert ist, wobei die WLAN-Zugangsvorrichtung konfiguriert ist, um den Zugang zu einem WLAN zu verwalten, und einen WLAN-Zugangspunkt, AP, oder eine WLAN-Zugangssteuerung, AC, umfasst;
wobei während der Übergabe des UE von dem WLAN an das Mobilfunknetz:
die Zugangsvorrichtungsschnittstelle (169) von der WLAN-Zugangsvorrichtung (106) Netzwerk-Downlink-Verkehr von einem drahtgebundenen Netzwerk (177) für das UE (102) empfangen soll; und
die Basisstation konfiguriert ist, um den Netzwerk-Downlink-Verkehr direkt an das UE (102) über die Mobilfunk-Luftschnittstelle (167) zu übertragen;
wobei während der Übergabe des UE von der Basisstation an die WLAN-Zugangsvorrichtung:
die Zugangsvorrichtungsschnittstelle (169) an die WLAN-Zugangsvorrichtung (106) CN-Downlink-Verkehr von dem CN (183) für das UE senden soll; und
wobei beim Bereitstellen der dualen UE-Konnektivität:
die Zugangsvorrichtungsschnittstelle (169) an die WLAN-Zugangsvorrichtung (106) ersten Downlink-Verkehr für das UE (102) senden soll; und
die Luftschnittstelle (167) zweiten Downlink-Verkehr an das UE über die Mobilfunkverbindung senden soll.

2. Basisstation nach Anspruch 1, wobei die Zugangsvorrichtungsschnittstelle (169) mit der WLAN-Zugangsvorrichtung (106) Benutzerebenenverkehr kommunizieren soll, der dem UE (102) entspricht.

3. Basisstation nach einem der Ansprüche 1 oder 2, wobei die Zugangsvorrichtungsschnittstelle (169) eine oder mehrere Steuerebenennachrichten mit der WLAN-Zugangsvorrichtung (106) kommunizieren soll.

4. Basisstation nach Anspruch 3, wobei die Zugangsvorrichtungsschnittstelle (169) von der WLAN-Zugangsvorrichtung (106) eine Steuerebenennachricht empfangen soll, die lastbezogene Information umfasst, die einer Last des WLAN-AP entspricht.

5. Basisstation nach Anspruch 3, wobei die Zugangsvorrichtungsschnittstelle an die WLAN-Zugangsvorrichtung eine Steuerebenennachricht senden soll, die UE-Kontextinformation umfasst, die dem UE entspricht.

6. Basisstation nach Anspruch 3, wobei beim Bereitstellen der dualen UE-Konnektivität die Steuerebenennachrichten eine oder mehrere Booster-Zellenverwaltungsnachrichten umfassen, um die WLAN-Zugangsvorrichtung (106) als Booster-Zelle zu verwalten.

7. Basisstation nach einem der Ansprüche 1-6, umfassend:
eine Vielzahl von Antennen;
einen Speicher; und
einen Prozessor.

## Revendications

1. Une station de base configurée pour gérer les communications d'un réseau cellulaire, la station de base comprenant :
une interface verticale (146) destinée à communiquer avec un réseau cœur, CN ;
une interface hertzienne (167) destinée à communiquer avec une équipement utilisateur, UE, via une liaison cellulaire ; et
une interface de dispositif d'accès (169) destinée à communiquer directement avec un dispositif d'accès de réseau sans fil d'étendue locale, WLAN, configuré pour une communication directe avec l'UE en utilisant une radio WLAN, le dispositif d'accès WLAN étant configuré pour gérer l'accès à un WLAN et comprenant un point d'accès, AP, WLAN ou un contrôleur d'accès, AC, WLAN ;
dans laquelle, pendant un handover dudit UE du WLAN vers le réseau cellulaire :
ladite interface de dispositif d'accès (169) doit recevoir dudit dispositif d'accès WLAN (106) un trafic de liaison descendante de réseau, en provenance d'un réseau filaire (177), pour ledit UE (102) ; et
la station de base est configurée pour transmettre directement le trafic de liaison descendante de réseau à l'UE (102) via l'interface hertzienne cellulaire (167) ;
dans laquelle, pendant un handover dudit UE de ladite station de base au dispositif d'accès WLAN :
ladite interface de dispositif d'accès (169) doit envoyer audit dispositif d'accès WLAN (106) un trafic de liaison descendante de CN, en provenance du CN (183), pour ledit UE ; et
dans lequel, lorsqu'une double connectivité d'UE est assurée :
ladite interface de dispositif d'accès (169) doit envoyer audit dispositif d'accès WLAN (106) un premier trafic de liaison descendante pour ledit UE (102) ; et
ladite interface hertzienne (167) doit envoyer un second trafic de liaison descendante audit UE via ladite liaison cellulaire.

2. La station de base de la revendication 1, dans laquelle ladite interface de dispositif d'accès (169) doit communiquer avec ledit dispositif d'accès WLAN (106) un trafic de plan utilisateur correspondant audit UE (102).

3. La station de base de l'une ou l'autre des revendications 1 ou 2, dans laquelle ladite interface de dispositif d'accès (169) doit communiquer un ou plusieurs messages de plan de contrôle avec ledit dispositif d'accès WLAN (106).

4. La station de base de la revendication 3, dans laquelle ladite interface de dispositif d'accès (169) doit recevoir dudit dispositif d'accès WLAN (106) un message de plan de contrôle comprenant des informations relatives à la charge correspondant à une charge dudit AP WLAN.

5. La station de base de la revendication 3, dans laquelle ladite interface de dispositif d'accès doit envoyer audit dispositif d'accès WLAN un message de plan de contrôle comprenant une information de contexte d'UE correspondant audit UE.

6. La station de base de la revendication 3, dans laquelle, lorsque la double connectivité d'UE est assurée, lesdits messages de plan de contrôle comprennent un ou plusieurs messages de gestion de cellule d'appoint pour gérer ledit dispositif d'accès WLAN (106) en tant que cellule d'appoint.

7. La station de base de l'une des revendications 1 à 6, comprenant :
une pluralité d'antennes ;
une mémoire ; et
un processeur.
